# EUROPEAN PATENT APPLICATION

(11) **EP 2 594 822 A1**
(43) Date of publication of application: **22.05.2013**
(21) Application number: 11806471.6
(22) Date of filing: 11.07.2011
(51) Int. Cl.: F16D 9/06, F16H 35/10

(54) **POWER TRANSMISSION DEVICE**

(30) Priority: 15.07.2010 JP 2010160348
(71) Applicant: Valeo Japan Co., Ltd., Saitama 360-0193 (JP)
(72) Inventor: AMEMORI, Masanori, Kumagaya-shi Saitama 360-0193 (JP); ISHIDA, Hiroyuki, Kumagaya-shi Saitama 360-0193 (JP)
(74) Representative: Delplanque, Arnaud
(86) International application number: PCT/JP2011/003954
(87) International publication number: WO 2012/008136

(57) **Abstract**

Provided is a power transmission device wherein the fatigue strength is maintained at the same level of a conventional power transmission device, and the static breakdown torque is reduced, so that a rupture portion can be ruptured before a power source is stopped even if the output of the power source is small. A power transmission member which is secured to a drive shaft of a compressor and which transmits a rotational power from a drive side rotator rotated by a drive source, has a hub (4) wherein a plurality of holes circumferentially arranged so as to surround the drive shaft are formed, and rupture portions are configured between the holes by bridge portions each having a predetermined length in the radial direction. Grooves (25) for reducing the breakdown torque are provided at portions excluding portions at which the stress is maximum in a usual working torque range (elastic deformation range), in the surface of each bridge portion of the hub (4).

## Description

### [Technical Field]

The present invention relates to a power transmission device which is fixed to a drive shaft of a compressor for transmitting a torque from a drive source to the compressor, and more particularly to a power transmission device which is used in transmitting rotational power from a drive source such as an engine or a motor to a compressor.

### [Background Art]

On a pulley or a magnet clutch of a compressor, a power transmission mechanism which is broken when the compressor is locked is mounted. In the case where the power transmission mechanism uses a magnet clutch, the power transmission mechanism is, in general, provided with a temperature fuse where a coil is disconnected when heat is generated due to slippage of an armature. On the other hand, in the case where the power transmission mechanism uses a clutchless pulley, the power transmission mechanism is, in general, provided with either a breaking mechanism which is broken when an excessively large torque is applied thereto or a release mechanism at a portion where the pulley and a drive shaft are connected to each other.

For example, JP-2005-226451discloses a clutchless compressor having the constitution where an imaginary circle having a predetermined radius about a drive shaft is assumed on a disc portion of a hub fixed to the drive shaft, where a plurality of arcuate elongated holes are punched out at fixed intervals along the circumference of the imaginary circle such that the elongated holes surround the drive shaft, and where a break portion which is broken when an excessively large torque is applied is provided between the elongated holes arranged adjacent to each other.

### [Summary of the Invention]

### [Problems that the Invention is to solve]

However, in the case where the above-mentioned metal-breaking-type power transmission device is used from a viewpoint of the reduction of cost, when a shape and a size of the break portion are set such that a fatigue rupture is not generated in a normal use torque range (elastic deformation range), a torque range where the break portion is plastically deformed is shifted to a high torque range so that the magnitude of a rupture torque is liable to be large.
Accordingly, in case of a vehicle of which a torque of a power source is small or in the case where an output of the power source is small as observed when idling or the like, there arises a drawback that when a compressor is locked, a power source is stopped before the break portion is broken.

To cope with such a drawback, it may be possible to narrow a width of a bridge portion. When the width of the bridge portion is narrowed, although a static rupture torque is lowered, simultaneously, there arises a drawback that fatigue strength is also relatively lowered due to a bending stress which acts on the break portion. Accordingly, the constitution of the break portion has been sought which can lower only a static rupture torque while maintaining fatigue strength at the substantially same level as the prior art.

The present invention has been made in view of the above-mentioned circumstances, and it is a primary object of the present invention to provide a power transmission device where, by lowering a static rupture torque while maintaining fatigue strength of a break portion at the same level as the prior art, even in the case where an output of a power source such as an engine is small, the break portion can be broken before the power source is stopped when a compressor is locked.

### [Means for solving the problems]

To achieve the above-mentioned object, according to the present invention, there is provided a power transmission device which includes: a drive-side rotary body which is rotated upon receiving rotational power from a drive source; and a power transmission member which is fixed to a drive shaft of a compressor and transmits the rotational power from the drive-side rotary body to the compressor, wherein the power transmission member includes a break portion having bridge portions of a predetermined length in the radial direction between a plurality of holes, the holes being formed in the power transmission member such that the holes are arranged in the circumferential direction so as to surround the drive shaft, and a rupture torque lowering structure which lowers a rupture torque is formed on a portion of a surface of the bridge portion avoiding a portion where the largest stress is generated in a torque range in which the bridge is elastically deformed (a normal use torque range).

Accordingly, the rupture torque lowering structure is formed in a portion of the bride portion avoiding a portion where the largest stress is generated in an elastic deformation range and hence, a static rupture torque can be lowered at the portion where the rupture torque lowering structure is formed. Further, while the fatigue rupture is generated at a portion where the largest stress is generated in a normal use torque range (elastic deformation range), a groove is not formed in such a portion and hence, the fatigue strength can be maintained at the substantially same level as fatigue level in the prior art.

Further, to achieve the above-mentioned object, there is provided a power transmission device which includes: a drive-side rotary body which is rotated upon receiving rotational power from a drive source; and a power transmission member which is fixed to a drive shaft of a compressor and transmits the rotational power from the drive-side rotary body to the compressor, wherein the power transmission member includes a break portion having bridge portions of a predetermined length in the radial direction between a plurality of holes, the holes being formed in the power transmission member such that the holes are arranged in the circumferential direction so as to surround the drive shaft, and a rupture torque lowering structure which lowers a rupture torque is formed on a portion of a surface of the bridge portion which includes a portion not affected by a bending stress.

Accordingly, on the bridge portion, the rupture torque lowering structure is formed at the portion including the portion (the center portion of the bridge portion) which is not affected by a bending stress and hence, a static rupture torque can be lowered at such a portion. Further, with respect to a bending stress which induces a fatigue rupture, the largest bending stress is generated at a portion away from the portion which is not affected by the bending stress (a portion where a groove is not formed) and hence, there is no change in the portion where the largest bending stress is generated with respect to the bending stress which induces a fatigue rupture even when the rupture torque lowering structure is formed whereby the fatigue strength can be maintained at the substantially same level as the prior art.

In the case where the power transmission member is constituted of a hub which is fixed to the drive shaft and a damper which is supported on the hub and is engaged with the drive-side rotary body, for example, the break portion may be formed on the hub. Further, although the above-mentioned groove may be formed on one side surface of the bridge portion, the groove may be formed on both side surfaces of the bridge portion.
Further, the above-mentioned rupture torque lowering structure may be constituted of a groove which is formed on a line which connects the centers of end portions of holes. In the case where the bridge portion is formed such that end portions of bridge portion which face the holes arranged adjacent to the bridge portion in an opposed manner are formed relatively wider than other portion of the bridge portion in the radial direction, the groove may be formed to pass the center of the bridge portion. For example, in the case where an end portion of the hole is enlarged so that the end portion is formed into a circle having a relatively large width in the radial direction, the groove may be formed on the narrowest portion of the bridge portion.

### [Advantage of the Invention]

As has been explained heretofore, according to the present invention, in the case where the break portion of the power transmission device is constituted such that a plurality of holes which are arranged in the circumferential direction are formed so as to surround the drive shaft such that the bridge portion having a predetermined length in the radial direction is formed between the neighboring holes, by forming the rupture torque lowering structure (for example, the groove which extends between the holes) which lowers a rupture torque at the portion of the surface of the bridge portion avoiding the portion where the largest stress is generated, or by forming the rupture torque lowering structure (for example, the groove which extends between the holes) which lowers a rupture torque at the portion including a portion which is not affected by a bending stress, a static rupture torque can be lowered at such a portion or the fatigue strength of the break portion can be maintained at the substantially same level as the fatigue strength in the prior art.

### [Brief Description of the Drawings]

- Fig. 1 is a view showing the external appearance constitution of a compressor on which a power transmission device according to the present invention is mounted.
- Fig. 2 is a cross-sectional view showing an example of the whole constitution of the power transmission device according to the present invention.
- Fig. 3A and Fig. 3B are views showing the power transmission device according to the present invention, wherein Fig. 3A is a view of the power transmission device as viewed in the axial direction, andFig. 3B is a perspective view of the power transmission device.

- Fig. 4 is an exploded perspective view showing the power transmission device according to the present invention.
- Fig. 5A and Fig. 5B are views showing a hub which constitutes a part of the power transmission device, wherein Fig. 5A is a cross-sectional side view of the hub, and Fig. 5B is a view of the hub as viewed in the axial direction.
- Fig. 6A to Fig. 6C are views showing grooves which are formed on break portions (bridge portions) each of which is formed between holes formed adjacent to each other in the hub, wherein Fig. 6A is a cross-sectional view showing the hub on which the grooves are formed, Fig. 6B is an enlarged cross-sectional view showing a part of the hub on which the grooves in Fig. 6A are formed, and Fig. 6C is an enlarged view of the part on which the grooves are formed as viewed in the axial direction of the hub.

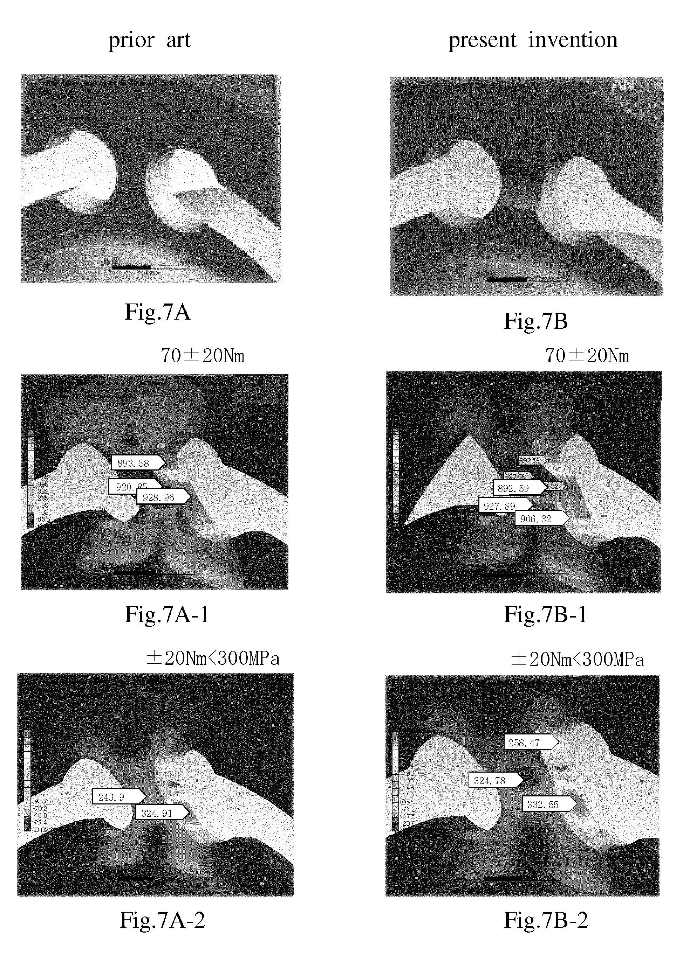

- Fig. 7A to Fig. 7B-2 are analytical views obtained by a finite element method (FEM) showing a Von Mises stress on a break portion, wherein Fig. 7A is a view showing a state where a torque is not applied to a break portion on which a groove is not formed, Fig. 7A-1 is a view showing a state when a high torque is applied to the break portion, and Fig. 7A-2 is a view showing a state when a low torque is applied to the break portion. Fig. 7B is a view showing a state where a torque is not applied to a break portion on which a groove is formed, Fig. 7B-1 is a view showing a state when a high torque is applied to the break portion, and Fig. 7B-2 is a view showing a state when a low torque is applied to the break portion.
- Fig. 8A and Fig. 8B are views showing the size relationship of a break portion of the hub and an area in the vicinity of the break portion, wherein Fig. 8A is a view of the break portion as viewed in the axial direction of the hub, and Fig. 8B is a view showing a cross section of the break portion.
- Fig. 9 is a graph showing the comparison between a conventional break portion on which a groove is not formed and a break portion on which a groove is formed with respect to a nominal strain, a nominal stress and a true stress.

### [Mode for carrying out the Invention]

Hereinafter, an embodiment of the present invention is explained in conjunction with drawings.

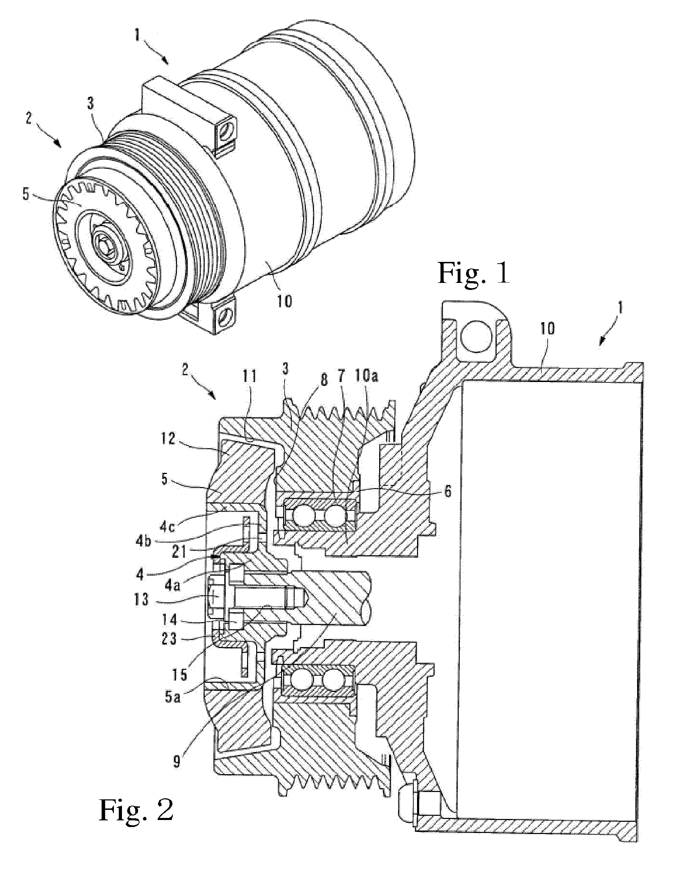

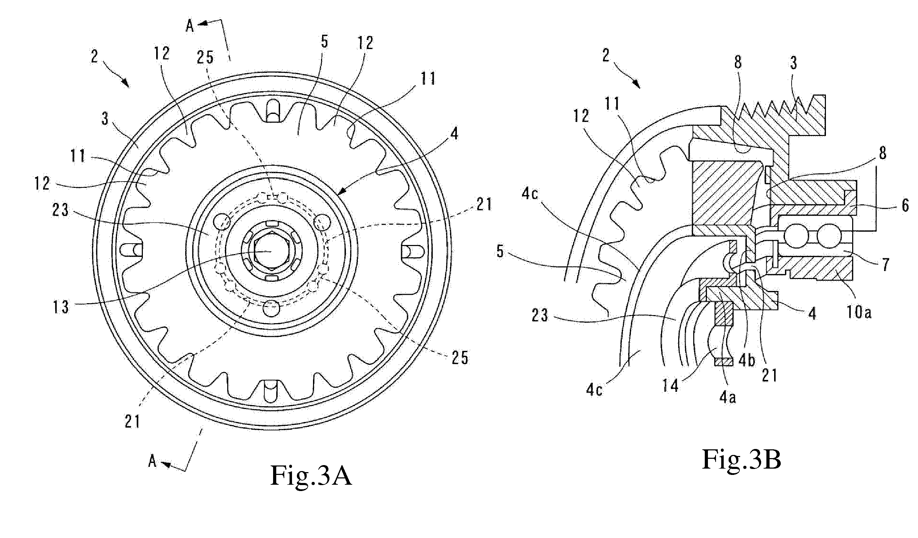

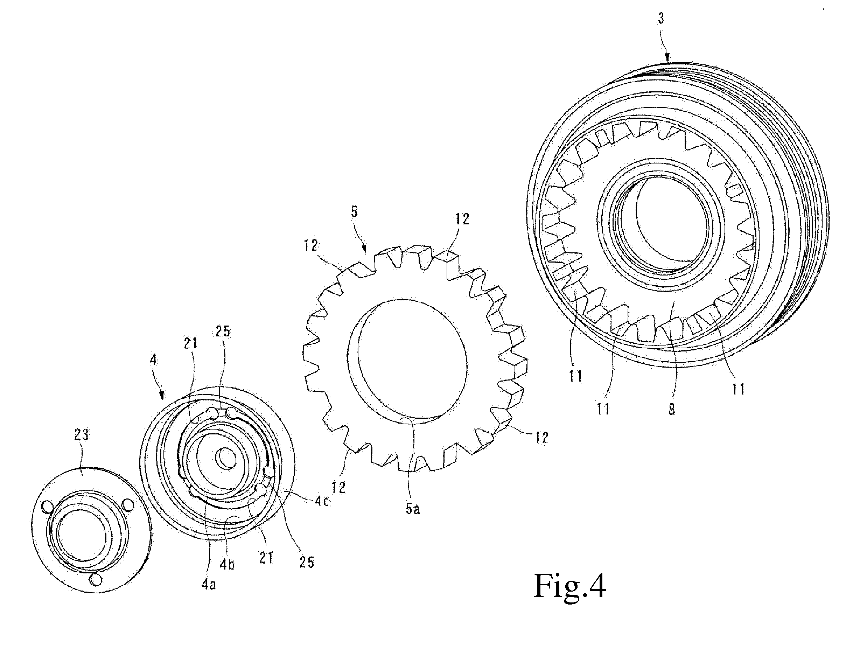

Fig. 1 to Fig. 4 show one example of a power transmission device 2 according to the present invention used for a clutchless compressor 1. The power transmission device 2 is basically constituted of a pulley 3 which constitutes a drive-side rotary body, and a hub 4 and a damper rubber 5 which constitute a power transmission member.

Out of these constitutional parts, the pulley 3 is a pulley made of a synthetic resin (a phenol resin, for example), for example. A cylindrical member 6 is fixed to an inner peripheral surface of the pulley 3 by insertion molding, and a radial bearing 7 is fixed to the cylindrical member 6 by press-fitting so that the pulley 3 is rotatably mounted on a boss portion 10a of a housing 10 of the compressor 1 by way of the radial bearing 7.

A belt (not shown in the drawing) is wound around an outer peripheral surface of the pulley 3, and the pulley 3 is rotated about a drive shaft 9 of the compressor 1 by a drive force transmitted from a power source such as an engine (not shown in the drawing).

An accommodating recessed portion 8 is formed on a front surface side of the pulley 3, and the damper rubber 5, the hub 4 which is fixed to the drive shaft 9 and supports the damper rubber 5 are accommodated in the accommodating recessed portion 8. A large number of engaging recessed portions 11 with which engaging projecting portions 12 of the damper rubber 5 described later are engaged are continuously and annularly formed on an inner peripheral surface of the housing recessed portion 8. A pulley-side engaging portion is formed by these continuously-formed engaging recessed portions 11.

A distal end portion of the drive shaft 9 projects from the housing 10, and the hub 4 is fixed to the distal end portion using a bolt 13. The bolt 13 has a flange and is threadedly engaged with female threads 15 formed on a distal end of the drive shaft 9 by way of a washer 14. Accordingly, the hub 4 and the drive shaft 9 are integrally rotated with each other.

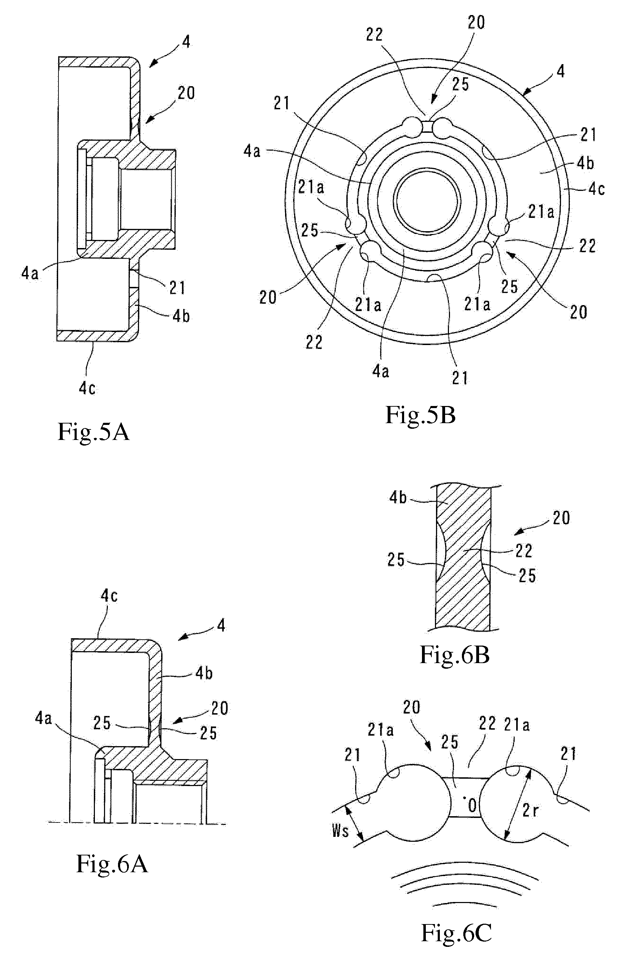

The hub 4 is made of carbon steel for machine structural use such as S45C, for example. As shown also in Fig. 5, the hub 4 is constituted of a hub portion 4a which is fitted on and fixed to the drive shaft 9, a disc portion 4b which is connected to the hub portion 4a, and a damper support portion 4c which is fixed to the damper rubber 5 and supports the damper rubber 5.

The damper rubber 5 which is supported on the hub 4 is made of a synthetic rubber which constitutes an annular body. A fitting hole 5a into which the hub 4 is fitted is formed at the center of the dumper rubber 5, and the dumber support portion 4c of the hub 4 is fixedly mounted in the fitting hole 5a by means of compression bonding, adhesive bonding (vulcanization adhesion) or the like. Further, a large number of engaging projecting portions 12 which mesh with the engaging recessed portions 11 formed on the pulley 3 are continuously and annularly arranged on an outer peripheral surface of the damper rubber 5, and a damper-rubber-side engaging portion is formed of the engaging projecting portions 12 which are continuously formed.

Accordingly, the dumper rubber 5 is mounted on the pulley 3 by inserting the damper rubber 5 to which the hub 4 is fixed into the accommodating recessed portion 8 of the pulley 3 and by making the damper-rubber-side engaging portion (engaging projecting portions 12) and the pulley-side engaging portion (engaging recessed portions 11) engage with each other (by making the engaging projecting portions 12 of the damper-rubber-side engaging portion and the engaging recessed portions 11 of the pulley-side engaging portion engage with each other). Accordingly, a rotational force from the pulley 3 is transmitted to the hub 4 by way of the damper rubber 5, and the rotational force is transmitted to the drive shaft 9 from the hub 4. The dumper rubber 5 has a function of damping a fluctuation in torque as a material property thereof.

As shown also in Fig. 5 and Fig. 6, break portions 20 are formed on the disc portion 4b of the hub 4. Each break portion 20 is formed between elongated holes arranged adjacent to each other in such a manner that an imaginary circle having a predetermined radius about the drive shaft 9 is assumed on the disc portion 4b, and a plurality of (three in this example) arcuate elongated holes (slits) 21 are formed in the disc portion 4b on the imaginary circle at predetermined intervals.

On both end portions of the elongated hole 21, an enlarged-diameter portion 21a having a width larger than a width ws of an intermediate portion of the elongated hole 21 is formed. In this example, the enlarged diameter portion 21a is formed into a circular shape having a diameter 2r larger than a width of the intermediate portion. Accordingly, the break portion 20 is constituted of a bridge portion 22 which is formed longer than the width ws of the intermediate portion of the elongated hole 21 in the radial direction of the hub 4. In this embodiment, the bridge portion 22 is formed so that an intermediate portion (a portion on which the imaginary circle line passes) of the bridge portion 22 has the smallest width.

Reference 23 indicates a cover which is fixed to an inner side of the damper support portion 4c of the hub 4 so as to cover the hub portion 4a and is arranged to face the disc portion 4b in an opposed manner with a predetermined distance therebetween.

Accordingly, when a compressor side is locked for some reason so that an excessively large torque is applied to the pulley 3, the break portions20 formed on the hub 4 are broken so that the hub 4 is divided into a remaining portion ranging from the break portions 20 to the hub portion 4a and a free separated portion ranging from the break portions 20 to the damper support portion 4c with the break portions 20 set as a boundary, and the free separated portion starts idling. At this time, although there exists a possibility that the free separated portion is removed toward a distal end side of the drive shaft in the axial direction along with the breaking of the break portions 20, the cover member 23 is provided in front of the hub portion 4a and hence, the broken hub 4 is engaged with the cover member 23 whereby the removal of the broken hub 4 can be prevented.

It is preferable that the break portions 20 are broken before a power source is stopped when the compressor 1 is locked even in the case where a vehicle is of a type with a power source of a small torque or in the case where an output of a power source is small such as idling.
Accordingly, the following technical feature is imparted to the break portions 20. That is, as shown in Fig. 5 and Fig. 6, grooves 25 which constitute a rupture torque reduction means are formed on both side surfaces (front side surface and rear side surface) of the bridge portions 22 such that the rupture torque reduction means connects the elongated holes to each other.

In this embodiment, the groove 25 is formed by cutting the surface of the break portion 20 into an arcuate shape in cross section, and is formed such that the groove 25 connects the elongated holes with each other at a portion avoiding a portion the largest stress is generated. The "portion avoiding a portion where the largest stress is generated" means a portion avoiding a portion where the largest stress is generated within a normal use torque range of the break portion (a range where the break portion is elastically deformed, that is, a range where a torque is equal to or less than 50Nm), that is, a portion avoiding a base portion of the bridge portion 22 shown in Fig. 7B-2 (a portion to which a stress of 332.55MPa is applied). In this embodiment, the grooves 25 are formed on a line which connects the centers of end portions of the elongated holes 21 (on the imaginary circle which passes the center lines of the elongated holes 21).

Further, when the break portion 20 is formed as the bridge portion 22 having a predetermined length in the radial direction as described above for lowering only a static rupture torque without influencing a bending stress (while maintaining fatigue strength at the same level as the prior art), the groove 25 is formed such that the groove 25 extends between the holes so as to include a portion which is not affected by a bending stress. That is, a bending stress at the center of the bridge portion 22 (a point of center of an imaginary line which passes the centers of the respective end portions of the elongated holes 21 arranged adjacent to each other) becomes zero theoretically and hence, by forming the groove 25 such that the groove 25 passes on the point of center (point O) of the bridge portion 22, the groove 25 hardly influences fatigue strength attributed to a bending stress (fatigue strength is hardly lowered).

According to the studies which the applicant of this application made, it is confirmed that a favorable result can be obtained by setting the following size relationship in forming the groove 25 such that the groove 25 passes on the center of the bridge portion 22 from a viewpoint of lowering a static rupture torque without lowering fatigue strength.

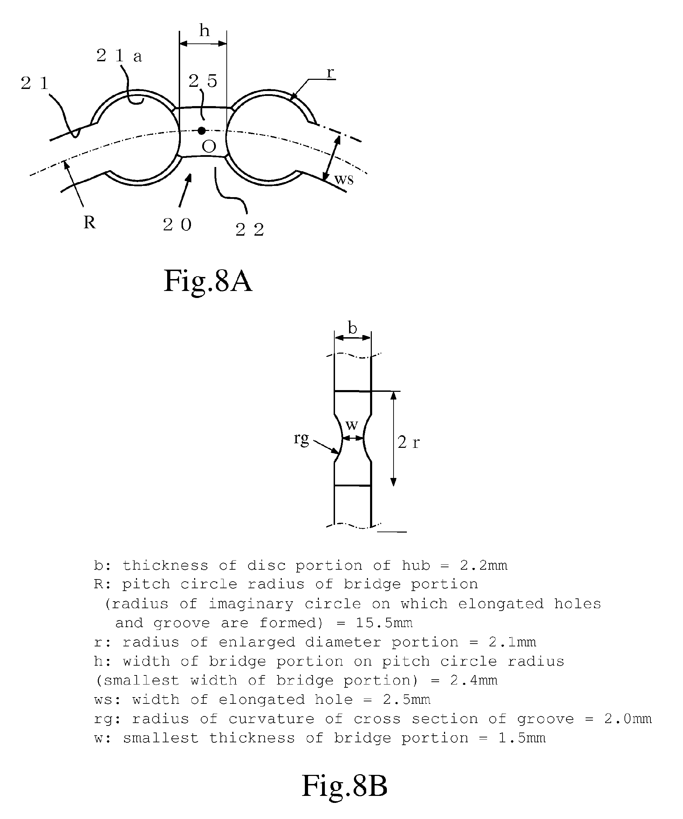

That is, the hub is made of carbon steel (S45C) and, as shown in Fig. 8, assuming a thickness of the disc portion 4b of the hub as b, a pitch circle radius of the bridge portion 22 (a radius of an imaginary circle on which the elongated holes and the groove are formed) as R, a radius of the enlarged diameter portion 21a formed on both end portions of the elongated holes 21 as r, a width of the bridge portion 22 on the pitch circle radius as h, a width of the elongated hole 21 in the radial direction as ws, a radius of curvature of a cross section of the groove 25 formed on the bridge portion 22 as rg, and the smallest thickness in a portion of the bridge portion 22 on which the groove 25 is formed as w, the respective sizes are set as follows.
thickness of the disc portion of the hub: b = 2.2mm
pitch circle radius of the bridge portion 22: R = 15.5mm
radius of the enlarged diameter portion 21a: r = 2.1mm
width of the bridge portion on the pitch circle radius
(smallest width of the bridge portion): h = 2.4mm
width of the elongated hole in the radial direction: ws = 2.5mm
radius of curvature of a cross section of the groove: rg = 2.0mm
smallest thickness in a portion of the bridge portion on which the groove is formed: w = 1.5mm

A case where a required high torque (70±20Nm) is applied and a case where a low torque (±20Nm at pressure of less than 300MPa) which influences a fatigue rupture is applied are studied using analytical views (Von Mises stress) obtained by a finite element method with respect to a break portion 20 on which the groove 25 described above is formed and a conventional break portion 20 on which the groove 25 is not formed respectively. As shown in Fig. 7, in the case where a low torque (approximately 20Nm) which influences a fatigue rupture is applied, by forming the groove 25 on the break portion, as shown in Fig. 7B-2, although a stress is increased also on the groove 25, the largest stress is generated_on the base portion of the bridge portion 22 (the portion of the bridge portion 22 away from the groove 25 in the radial direction). That is, the largest stress is acquired at the same position as the conventional break portion 20 having no groove shown in Fig. 7A-2. From this result, it is proved that, in an elastic deformation range of the break portion, the portion where the largest stress is generated is substantially equal regardless of the presence and non-presence of the groove 25 so that the formation of the groove 25 does not cause a large change in the fatigue strength of the break portion 20.

To the contrary, in the case where a high torque close to a rupture torque is applied to the bridge portion 20, as shown in Fig. 7A-1, in the conventional constitution where the groove 25 is not formed on the bridge portion, the largest stress is generated on the base portion of the bridge portion 22, while in the constitution of this embodiment where the groove is formed on the bridge portion, as shown in Fig. 7B-1, a stress is concentrated more on the groove portion 25 than the base portion of the bridge portion 22.

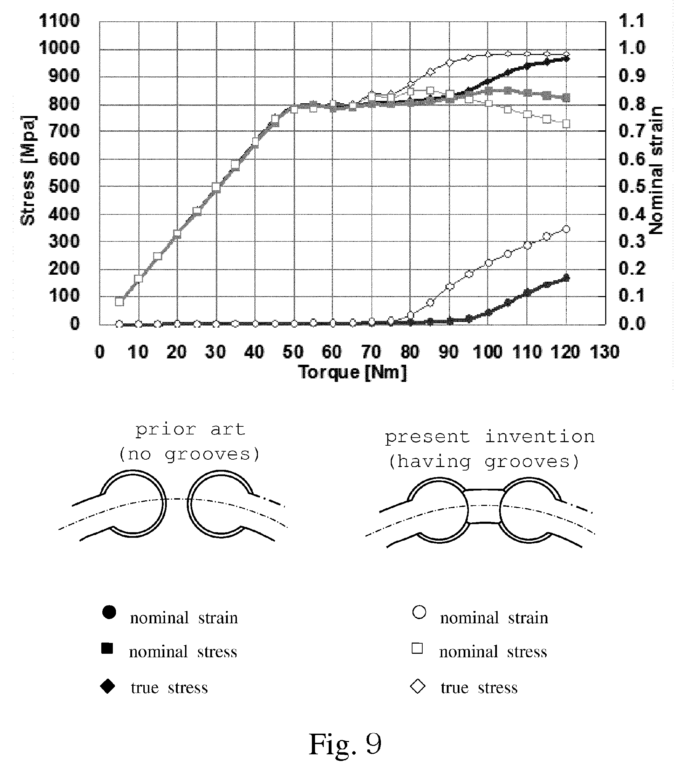

Fig. 9 is a graph showing the above-mentioned result quantitatively. In Fig. 9, a stress of a portion where the largest stress is generated is taken on a left axis of ordinates. As can be clearly understood from this graph, it is considered as follows. In a low torque range (an elastic deformation range of approximately 50Nm or less) which constitutes a measure for fatigue rupture strength, regardless of the presence or non-presence of the groove, there is no change in a portion where a stress which acts on the bridge portion becomes the largest and hence, no change is recognized in a characteristic curve. However, in the case where the groove 25 is formed on the bridge portion 20, when a torque enters a plastic deformation range, a portion on which the largest stress acts is shifted to the groove so that a strain of such a portion becomes larger than strains of other portions whereby a true stress is increased and the breaking occurs on the groove portion 25.

Actually, as can be clearly understood from the graph shown in Fig. 9, a strain is increased soon after a torque enters the plastic deformation range, and a true stress starts to increase with respect to a nominal stress. Assuming a torque at which a nominal strain becomes 0.1 (10%) as a rupture torque, a rupture torque was 108Nm in case of the conventional break portion on which the groove 25 was not formed. Meanwhile a rupture torque is 87Nm in case of the break portion 20 on which the groove 25 is formed so that the rupture torque is decreased by an approximately 19% compared with the conventional break portion. That is, it is understood that, in the case where the groove 25 is formed on the break portion 20, although the characteristic is substantially equal to the characteristic of the prior art when a torque is in an elastic range, when the torque enters the plastic range, a stress becomes relatively high even with a torque of the same magnitude so that the hub 4 is liable to be broken at the groove 25.

Accordingly, by forming the groove 25 as described above, the behavior of the break portion in a plastic range is made largely different between the break portion 20 on which the groove 25 is formed and the conventional break portion on which the groove 25 is not formed while making the behavior of the break portion in an elastic range equal between the break portion 20 on which the groove 25 is formed and the conventional break portion on which the groove 25 is not formed. Accordingly, a rupture torque can be lowered while maintaining fatigue strength of the break portion at the substantially same level as the fatigue strength in the prior art whereby, even in the case where an output of the power source is small, when the compressor is locked, the break portion can be broken before the power source is stopped.

In the above-mentioned explanation, although the case where the groove 25 is formed on both side surfaces of the bridge portion 22 is exemplified, the substantially same advantageous effects can be acquired by forming the groove 25 only on one side surface of the bridge portion 22.
With respect to the above-mentioned constitution, although the case where the power transmission device is applied to the clutchless compressor is exemplified, the substantially same rupture torque lowering structure may be applied to an armature side of a compressor having a magnet clutch.

Further, in the above-mentioned constitution, although the case where the end portions of the elongated hole are enlarged in a circular shape for forming the bridge portion 22 is exemplified, the end portions of the elongated hole may be formed into a radially-elongated rectangular shape. The shape of the groove 25 is also not limited to the above-mentioned constitution, and any groove shape may be adopted provided that a stress at the time of applying a high torque can be concentrated on a portion of the bridge portion avoiding a portion where the largest stress is generated in an elastic deformation range (low torque range) or a groove can be formed in a state where the groove includes a portion of the bridge portion which is not affected by a bending stress.
Further, in the above-mentioned constitution, the constitution where the break portions 20 are formed on the hub 4 is exemplified. However, it is sufficient that a member on which the break portion 20 is formed is a power transmission member. Accordingly, a member different from the hub 4 may be used as the member on which the break portion 20 is formed. For example, when an intermediate member is interposed between the hub 4 and the damper rubber 5, the break portion20 may be formed on the intermediate member.

### [Description of Reference Numerals and Signs]

| | |
|---|---|
| 1: | compressor |
| 2. | power transmission device |
| 3: | pulley |
| 4: | hub |
| 9: | drive shaft |
| 20: | break portion |
| 21: | elongated hole |
| 22: | bridge portion |
| 25: | groove |

## Claims

1. Power transmission device comprising: a drive-side rotary body which is rotated upon receiving rotational power from a drive source; and a power transmission member which is fixed to a drive shaft of a compressor and transmits the rotational power from the drive-side rotary body to the drive shaft of the compressor, wherein
- the power transmission member includes a break portion having bridge portions of a predetermined length in the radial direction between a plurality of holes, the holes being formed in the power transmission member such that the holes are arranged in the circumferential direction so as to surround the drive shaft, and
- a rupture torque lowering structure which lowers a rupture torque is formed on a portion of a surface of the bridge portion avoiding a portion where the largest stress is generated in a torque range in which the bridge is elastically deformed.

2. Power transmission device comprising: a drive-side rotary body which is rotated upon receiving rotational power from a drive source; and a power transmission member which is fixed to a drive shaft of a compressor and transmits the rotational power from the drive-side rotary body to the compressor, wherein
- the power transmission member includes a break portion having bridge portions of a predetermined length in the radial direction between a plurality of holes, the holes being formed in the power transmission member such that the holes are arranged in the circumferential direction so as to surround the drive shaft, and
- a rupture torque lowering structure which lowers a rupture torque is formed on a portion of a surface of the bridge portion which includes a portion not affected by a bending stress.

3. Power transmission device according to claim 1 or 2, wherein the power transmission member is constituted of a hub which is fixed to the drive shaft and a damper which is supported on the hub and is engaged with the drive-side rotary body, and the break portion is formed on the hub.

4. Power transmission device according to any one of claims 1 to 3, wherein the rupture torque lowering structure is formed on both side surfaces of the bridge portion.

5. Power transmission device according to any one of claims 1 to 4, wherein the rupture torque lowering structure is constituted of a groove which is formed on a line which connects the centers of end portions of the holes.

6. Power transmission device according to claim 5, wherein the bridge portion is formed such that end portions of bridge portion which face the holes arranged adjacent to the bridge portion in an opposed manner are formed relatively wider than other portion of the bridge portion in the radial direction, and the groove is formed on the narrowest portion of the bridge portion.
